# EUROPÄISCHE PATENTSCHRIFT

(11) **EP 0 642 008 B1**
(45) Veröffentlichungstag und Bekanntmachung des Hinweises auf die Patenterteilung: **24.02.1999**
(21) Anmeldenummer: 94107054.2
(22) Anmeldetag: 05.05.1994
(51) Int. Cl.: G01M 1/06

(54) **Vorrichtung zum Antrieb einer Messspindel einer Auswuchtmaschine**
Driving device for the measuring shaft of a balancing machine
Dispositif d'entraînement de l'axe de mesure d'une machine d'équilibrage

(30) Priorität: 03.09.1993 DE 4329831
(43) Veröffentlichungstag der Anmeldung: 08.03.1995
(73) Patentinhaber: HOFMANN WERKSTATT-TECHNIK GMBH, D-64319 Pfungstadt (DE)
(72) Erfinder: Goebel, Eickhart, D-64319 Pfungstadt (DE)
(74) Vertreter: Nöth, Heinz, Dipl.-Phys.

(56) Entgegenhaltungen:
- US-A- 4 435 982

## Beschreibung

Die Erfindung betrifft eine Vorrichtung nach dem Oberbegriff des Patentanspruchs 1.

Bei einer derartigen aus der US-PS 4,480,472 bekannten Vorrichtung wird die Antriebsverbindung zwischen Meßspindel und Reibrad über einen zusätzlichen Kupplungsmechanismus, welcher das Reibrad in die Antriebsposition bewegt, hergestellt. Auch bei der aus der US-PS 4,435,982 bekannten Antriebseinrichtung wird das Reibrad mit Hilfe eines Getriebes in die Antriebsposition, d.h. in Reibschluß mit der Meßspindel gebracht.

Aufgabe der Erfindung ist es, eine Vorrichtung nach dem Oberbegriff des Patentanspruchs 1 zu schaffen, bei welcher die Antriebsverbindung zwischen motorgetriebenem Reibrad und der Meßspindel der Auswuchtmaschine ohne Zuhilfenahme einer zusätzlichen Einrichtung erreicht wird.

Diese Aufgabe wird erfindungsgemäß durch die kennzeichnenden Merkmale des Patentanspruches 1 gelöst.

Bei der Erfindung ist eine zusätzliche Einrichtung, welche die Bewegung des Reibrades in die Antriebsposition bewirkt, nicht erforderlich. Das Reibrad, welches mit dem Elektromotor eine Bewegungseinheit bildet, wird durch ein bei der Beschleunigung des Rotors (Läufers) des Elektromotors erzeugtes Drehmoment in die Antriebsposition gebracht. Unmittelbar nach dem Einschalten des Elektromotors kommt dieses Drehmoment zur Wirkung, so daß das Reibrad gleich nach dem Einschalten in Antriebsposition gebracht wird. Dieses Drehmoment wird erzeugt infolge einer Kraft, welche an der Bewegungseinheit bei der Beschleunigung des Elektromotorläufers und des Reibrades im Abstand von einer versetzt zur Achse des Rotors bzw. Läufers des Elektromotors am Maschinenrahmen abgestützte Lagereinrichtung der Bewegungseinheit angreift. Die Lagereinrichtung bildet eine Schwenkachse, um welche das Drehmoment zur Wirkung kommt. Durch dieses Drehmoment wird die aus dem Reibrad und dem Elektromotor bestehende Bewegungseinheit beim Einschalten des Elektromotors geschwenkt, so daß das Reibrad in Antriebsverbindung mit der Spindel kommt. Hierzu kann die Spindel drehfest mit einem Antriebsrad verbunden sein, an welches das vom Elektromotor angetriebene Reibrad durch das erzeugte Drehmoment angedrückt wird. Das Drehmoment wird so lange erzeugt wie der Rotor (Läufer) des Elektromotors beschleunigt wird. Solange der Rotor des Elektromotors beschleunigt wird, wirkt auf die Bewegungseinheit eine Kraft um die von der Lagereinrichtung definierte Schwenkachse. Auf diese Weise wird eine selbsttätige Herstellung der Antriebsverbindung zwischen dem vom Elektromotor angetriebenen Reibrad und der Meßspindel hergestellt. Diese Verbindung wird durch am Reibschluß zur Auswirkung kommende Gegenmomente, welche bei der Beschleunigung des an der Meßspindel befestigten Rotors, z.B. Kraftfahrzeugrades, entstehen, unterstützt bzw. mit aufrecht erhalten. Unterstützend kann ein Reibbelag am Reibrad und/oder an einem mit der Meßspindel drehfest verbundenem Antriebsrad wirken. Zwischen Reibrad und Elektromotor kann ein Getriebe zur Drehzahlunter- bzw. - übersetzung vorgesehen sein. Es ist jedoch auch möglich, daß das Reibrad starr bzw. drehfest mit dem Rotor des Elektromotors verbunden ist.

Die vom Elektromotor und Reibrad gebildete Bewegungseinheit kann in der Weise am Maschinenrahmen gelagert sein, daß die Antriebsverbindung zwischen dem Reibrad und der Meßspindel bei Beendigung der Beschleunigung, d. h. beispielsweise bei Drehung des Rotors des Elektromotors mit konstanter oder abfallender Drehzahl selbsttätig gelöst wird, da bei fehlender Beschleunigung des Rotors (Läufers) des Elektromotors und daraus resultierendem Fortfall von Übertragungskräften auf die Bewegungseinheit keine Kraft um die von der Lagereinrichtung gebildete Schwenkachse und am Reibschluß zwischen Spindel und Reibrad kein Gegenmoment mehr wirken.

Die aus Elektromotor und Reibrad bestehende Bewegungseinheit bewegt sich aus der Antriebsposition in ihre Ruheposition, in welcher keine Antriebsverbindung zwischen Reibrad un Spindel herrscht, aufgrund der nunmehr fehlenden Kraft, mit welcher die Bewegungseinheit in die Antriebsposition gebracht und gehalten worden ist. Unterstützend kann dabei eine durch die Weiterdrehung des nicht mehr beschleunigten Rotors und damit gekoppeltem Reibrades bewirkte Schleuderbewegung der Bewegungseinheit ausgenützt werden. In der Ruheposition kann die Bewegungseinheit im Gleichgewicht gehalten werden. Dies kann dadurch erfolgen, daß die Bewegungseinheit nach Art eines Pendels in der Lagereinrichtung gelagert ist. Das Gewicht der Bewegungseinheit wird dann in der Lagereinrichtung, welche als Pendellager wirkt, ausgeglichen. Es kann auch eine andersartige Gewichtsausgleichseinrichtung in Form einer am Maschinenrahmen abgestützten Feder vorgesehen sein, welche bei fehlender Beschleunigung des Rotors des Elektromotors und damit des Reibrades die Bewegungseinheit in die Ruheposition, d.h. außer Antriebsverbindung mit der Meßspindel bringt.

Beim Einschalten des Elektromotors wirkt die schon erläuterte Kraft, welche aus der Beschleunigung des Rotors und des Reibrades resultiert, so daß die Bewegungseinheit und damit das Reibrad in die Antriebsposition gebracht wird.

Durch die Erfindung wird somit eine selbsttätige Bewegung des Reibrades in die Antriebsposition und ein selbsttätiges Entfernen des Reibrades aus der Antriebsposition, beispielsweise bei Erreichen einer gewünschten Enddrehzahl, erreicht. Der Elektromotor kann bei Erreichen der Enddrehzahl oder früher abgeschaltet werden und kann nach dem Abkuppeln weiterlaufen.

Die Antriebsvorrichtung kann in vorteilhafter Weise zum Einsatz kommen bei solchen Auswuchtmaschinen, bei denen die Unwuchtmessung im Auslauf der Meßspindel, d.h. bei vom Antrieb entkoppelter Spindel erfolgt, wie das beispielsweise in der US-PS 4,480,472 beschrieben ist.

Anhand der Figuren wird an Ausführungsbeispielen die Erfindung noch näher erläutert. Es zeigt:
- Fig. 1:: in schematischer Darstellung eine Seitenansicht eines Ausführungsbeispiels eines Meßspindelantriebs einer Auswuchtmaschine;
- Fig. 2:: eine Ansicht der in Fig. 1 dargestellten Vorrichtung in der Schnittlinie II-II der Fig. 1; und
- Fig. 3:: ein weiteres Ausführungsbeispiel eines Meßspindelantriebs.

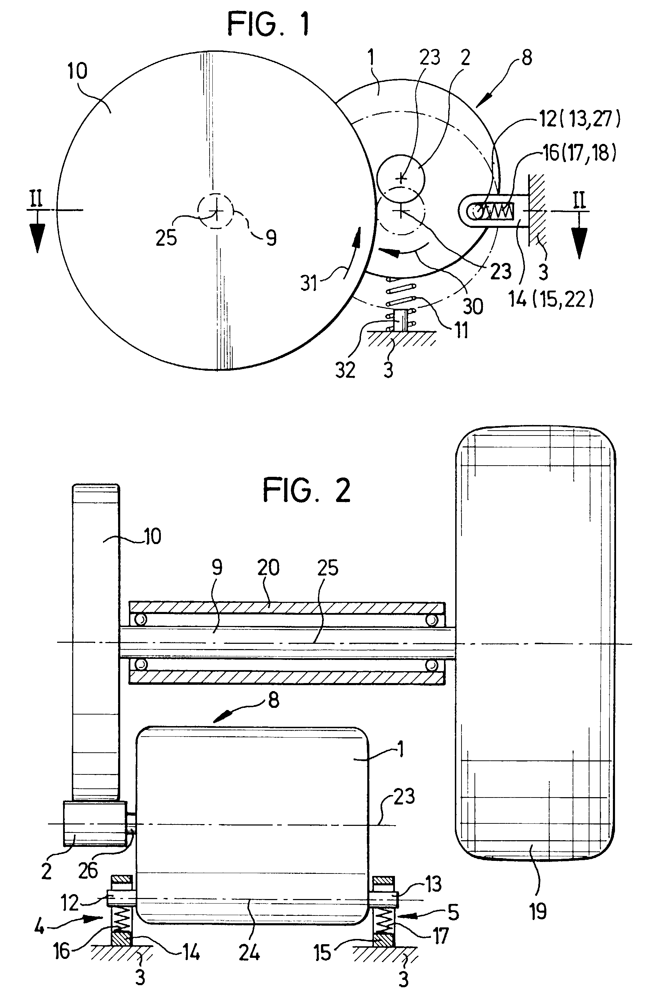

Eine in den Figuren 1 bis 3 dargestellte Meßspindel 9 ist in bekannter Weise in einer Meßspindellagerung 20 einer Auswuchtmaschine gelagert. Für die Unwuchtmessung ist ein Rotor 19, z.B. ein Kraftfahrzeugrad, in bekannter Weise drehfest an der Meßspindel 9 aufgespannt. Drehfest mit der Meßspindel 9 ist ein Antriebsrad 10 verbunden. Während des Meßlaufs wird die Meßspindel 9 um ihre Spindelachse 25 gedreht. Der Antrieb der Meßspindel 9 erfolgt mit Hilfe der im folgenden beschriebenen Antriebsvorrichtung.

Die Antriebsvorrichtung besitzt einen Elektromotor 1. Mit einem nicht näher dargestellten Rotor (Läufer) des Elektromotors 1 ist über eine Ausgangswelle 26 ein Reibrad 2 drehfest verbunden. Zur Übersetzung oder Untersetzung kann zwischen Reibrad 2 und Motorläufer auch ein Getriebe geschaltet sein. Das Reibrad 2 und der Elektromotor 1 bilden eine Bewegungseinheit 8. Diese Bewegungseinheit 8 kann aus einer in der Fig. 1 mit durchgezogenen Linien dargestellten Ruheposition, in welcher das Reibrad 2 außer Eingriff mit dem Antriebsrad 10 ist, in eine Antriebsposition, welche in strichpunktierten Linien in der Fig. 1 dargestellt ist, gebracht werden. In der Antriebsposition besteht zwischen dem Reibrad 2 und dem Antriebsrad 10 ein Reibschluß. Reibrad 2 und/oder Antriebsrad 10 können mit einem Reibbelag ausgestattet sein.

In der Ruheposition wird ein Gewichtsausgleich der Bewegungseinheit 8 durch eine am Maschinenrahmen 3 abgestützte Feder 11 erreicht. Am Maschinenrahmen 3 ist die Bewegungseinheit 8 über eine Lagereinrichtung, welche eine Schwenkachse 24 bildet, abgestützt. Die Schwenkachse 24 wird von Lagerzapfen 12 und 13 gebildet, die am Gehäuse des Elektromotors 1 befestigt sind. Die Schwenkachse 24 erstreckt sich parallel zur Achse 23 des Rotors (Läufers) des Elektromotors 1. Die Lagerzapfen 12 und 13 sind in Zapfenführungen 14 und 15 (Fig. 2) gelagert. Die Zapfenführungen 14 und 15 bilden lineare Führungen für die Lagerzapfen 12 und 13 und damit für die Schwenkachse 24. Durch Druckfedern 16 und 17 werden die Lagerzapfen 12 und 13 in den Zapfenführungen in Richtung des Reibschlusses des Reibrades 2 mit dem Antriebsrad 10 vorgespannt. Durch die Druckfedern 16 und 17 wird beim Reibschluß zwischen Reibrad 2 und Antriebsrad 10 eine gleichbleibende (konstante) Andrückkraft erreicht. Durch die in den Zapfenführungen 14 und 15 geführten Lagerzapfen 12 und 13 werden zwei Lagerstellen 4 und 5 der Lagereinrichtung für die Bewegungseinheit 8 gebildet.

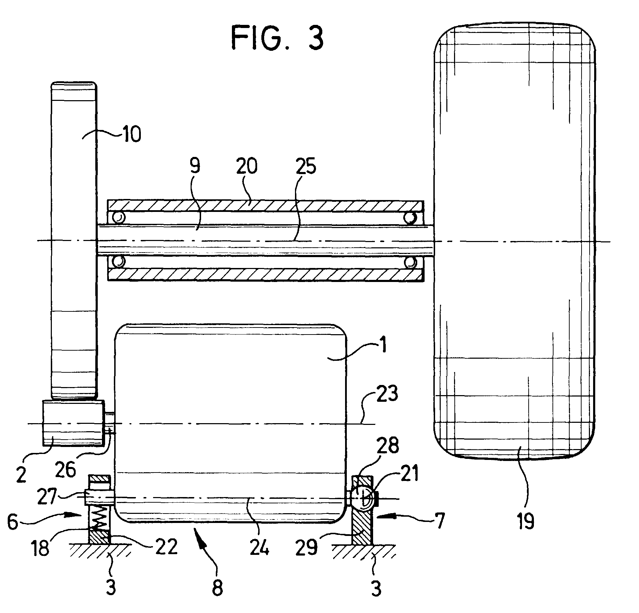

Bei dem in der Fig. 3 dargestellten Ausführungsbeispiel sind ebenfalls zwei Lagerstellen 6 und 7 vorgesehen. Die eine Lagerstelle 6 ist in der gleichen Weise ausgebildet wie die beiden Lagerstellen 4 und 5 im Ausfuhrungsbeispiel der Fig. 2. In einer Zapfenführung 22 ist der Lagerzapfen 27 linear beweglich geführt, wie das bei den Lagerzapfen 12 und 13 des Ausführungsbeispiels der Fig. 2 der Fall ist. Eine Druckfeder 18 vermittelt in Richtung des Reibschlusses zwischen Reibrad 2 und Antriebsrad 10 eine Vorspannung.

In der anderen Lagerstelle 7 wird ein Lagerdrehpunkt 21 für die Bewegungseinheit 8 gebildet. Durch den Lagerdrehpunkt 21 verläuft die Schwenkachse 24. Der Lagerdrehpunkt 21 wird von einer Lagerkugel 28 gebildet, die beweglich in einer am Maschinenrahmen 3 abgestützten Kugelhalterung 29 gelagert ist.

Wenn der Elektromotor 1 eingeschaltet wird, wird der Rotor des Elektromotors 1 beschleunigt. Auf die Bewegungseinheit 8 wirkt aufgrund dieser Beschleunigung eine Kraft, die über das Motorgehäuse in den Lagerstellen 4, 5 bzw. 6, 7 der beiden Ausführungsbeispiele am Maschinenrahmen 3 abgestützt wird. Hierdurch entsteht ein Drehmoment, durch welches die Bewegungseinheit 8 aus der Ruheposition in die Antriebsposition (strichpunktierte Linien in Fig. 1) gebracht wird. Durch den dabei entstehenden Reibschluß zwischen Reibrad 2 und Antriebsrad 10 wird die Spindel auf eine gewünschte Drehzahl gebracht. Während der Beschleunigungsphase wirkt auf die Bewegungseinheit 8 weiterhin die erläuterte Kraft um die Schwenkachse 24, welche durch die Lagerstellen 4, 5 bzw. 6, 7 gebildet ist. Die Drehrichtungen des Reibrades 2 und des Antriebsrades 10 sind in der Fig. 1 durch Pfeile 30 und 31 dargestellt. Der Reibschluß zwischen Reibrad 2 und Antriebsrad 10 erfolgt durch ein zwischen diesen beiden Bauteilen wirkendes Gegenmoment. Dieses Gegenmoment wird während der gesamten Beschleunigungsphase des Rotors des Elektromotors 1 aufrecht erhalten. Dieses Gegenmoment entsteht durch die Beschleunigung des angetriebenen Systems (Rotor 19, Spindel 9, Antriebsrad 10). Während des Reibschlusses zwischen Reibrad 2 und Antriebsrad 10 wird durch die Druckfedern 16 und 17 (Ausführungsbeispiel der Fig. 2) bzw. durch die Druckfeder 18 (Ausführungsbeispiel der Fig. 3) eine konstante Andrückkraft zwischen Reibrad 2 und Antriebsrad 10 gewährleistet. Die Wirkrichtung der Druckfedern 16, 17 bzw. 18 liegt etwa in einer Ebene, in welcher die Drehachse des antreibenden Reibrades 2, welche bei den dargestellten Ausführungsbeispielen mit der Drehachse 23 des Rotors des Elektromotors 1 zusammenfällt, und die Drehachse 25 der Meßspindel 9 sowie die Schwenkachse 24 liegen. Die Bewegungseinheit 8, z.B. das Gehäuse des Elektromotors 1, liegen in der Beschleunigungsphase an einem Anschlag 32 an.

Sobald die gewünschte Enddrehzahl der Meßspindel 9 erreicht wird, werden der Rotor des Elektromotors 1, das Reibrad und der auszuwuchtende Rotor 19 nicht mehr beschleunigt. Es fehlt dann die Kraft, mit welcher die Bewegungseinheit 8 in der Antriebsposition gehalten wird.

Bei dieser fehlenden Kraft wird die Bewegungseinheit 8 in die Ruheposition zurückgebracht, in welcher sie sich im Gleichgewicht befindet. Dieses Gleichgewicht kann, wie anhand der Fig. 1 schon erläutert, durch die Gewichtsausgleichseinrichtung in Form der Feder 11 erreicht werden oder auch durch eine pendelnde Aufhängung der Bewegungseinheit 8 in der Lagereinrichtung.

Wenn die Antriebsvorrichtung von der Meßspindel 9 abgekoppelt ist, bewegt sich die Meßspindel 9 im Auslauf. Während dieses Auslaufs kann in bekannter Weise, beispielsweise wie es in der US-PS 4,480,472 erläutert ist, der Unwuchtmeßvorgang durchgeführt werden.

## Patentansprüche

1. Vorrichtung zum Antrieb einer Meßspindel (9) einer Auswuchtmaschine mit einem Reibrad (2), das von einem einen Rotor aufweisenden Elektromotor (1) angetrieben ist und zusammen mit dem Elektromotor (1) eine an einem Maschinenrahmen (3) befestigte Einheit bildet, wobei das Reibrad (2) durch ein bei beschleunigtem Rotor des Elektromotors (1) erzeugtes Drehmoment mit der Meßspindel (9) in Antriebsverbindung und außer Antriebsverbindung bringbar ist,
dadurch **gekennzeichnet,**
daß die aus Elektromotor (1) und Reibrad (2) bestehende Einheit als Bewegungseinheit (8) ausgebildet ist, die um eine Schwenkachse (24) einer am Maschinenrahmen (3) angeordneten Lagereinrichtung (4, 5; 6, 7), welche gegenüber der Rotorachse (23) des Elektromotors (1) versetzt angeordnet ist, bewegbar abgestützt ist, so daß durch das bei beschleunigtem Rotor des Elektromotors (1) erzeugte Drehmoment die Bewegungseinheit (8) zur Herstellung der Antriebsverbindung zwischen dem Reibrad (2) und der Meßspindel (9) auf die Meßspindel (9) zu bewegt ist.

2. Vorrichtung nach Anspruch 1, dadurch gekennzeichnet, daß die Bewegungseinheit (8) in der Weise am Maschinenrahmen (3) gelagert ist, daß die Antriebsverbindung zwischen dem Reibrad (2) und der Meßspindel (9) durch Beendigung der Beschleunigung des Rotors des Elektromotors (1) selbsttätig gelöst ist.

3. Vorrichtung nach Anspruch 1 oder 2, dadurch gekennzeichnet, daß aufgrund eines bei der Kraftübertragung am Reibschluß zwischen Reibrad (2) und Meßspindel (9) bzw. einem mit der Meßspindel (9) drehfest verbundenem Antriebsrad (10) entstehenden Gegenmoments der Reibschluß aufrecht erhalten ist.

4. Vorrichtung nach einem der Ansprüche 1 bis 3, dadurch gekennzeichnet, daß in der Beschleunigungsphase die Bewegungseinheit (8) an einem Anschlag (32) anliegt.

5. Vorrichtung nach einem der Ansprüche 1 bis 4, dadurch gekennzeichnet, daß die Bewegungseinheit (8) durch eine Gewichtsausgleichseinrichtung in der Ruheposition im Gleichgewicht gehalten ist.

6. Vorrichtung nach Anspruch 5, dadurch gekennzeichnet, daß die Gewichtsausgleichseinrichtung als am Maschinenrahmen (3) abgestützte Feder (11) ausgebildet ist.

7. Vorrichtung nach einem der Ansprüche 1 bis 6, dadurch gekennzeichnet, daß die Bewegungseinheit (8) in der Lagereinrichtung (4, 5; 6, 7) gegenüber dem Maschinenrahmen (3) federnd gelagert ist.

8. Vorrichtung nach einem der Ansprüche 1 bis 7, dadurch gekennzeichnet, daß die Lagereinrichtung (4, 5; 6, 7) zwei Lagerstellen aufweist.

9. Vorrichtung nach Anspruch 8, dadurch gekennzeichnet, daß die Bewegungseinheit (8) in wenigstens einer Lagerstelle federnd gelagert ist.

10. Vorrichtung nach einem der Ansprüche 1 bis 9, dadurch gekennzeichnet, daß die Bewegungseinheit (8) in der Lagereinrichtung (4, 5; 6, 7) schwenkbar gelagert ist.

11. Vorrichtung nach einem der Ansprüche 1 bis 10, dadurch gekennzeichnet, daß die in der Lagereinrichtung (4, 5; 6, 7) gebildete Schwenkachse (24) parallel zur Rotorachse (23) liegt.

12. Vorrichtung nach einem der Ansprüche 1 bis 11, dadurch gekennzeichnet, daß die Bewegungseinheit (8) in einer Lagerstelle (7) um einen Lagerdrehpunkt (21) und in einer anderen Lagerstelle (6) geradlinig geführt ist.

13. Vorrichtung nach einem der Ansprüche 1 bis 11, dadurch gekennzeichnet, daß die Bewegungseinheit (8) in beiden Lagerstellen (4, 5) geradlinig geführt ist.

14. Vorrichtung nach Anspruch 12 oder 13, dadurch gekennzeichnet, daß die geradlinige Führung der Bewegungseinheit (8) im wesentlichen in einer Ebene erfolgt, in welcher die Drehachse (25) der Meßspindel (9) und die Achse des in Antriebsposition befindlichen Reibrades (2) liegen.

15. Vorrichtung nach einem der Ansprüche 1 bis 14, dadurch gekennzeichnet, daß die Achse des Reibrades (2) und die Rotorachse (23) des Elektromotors (1) zusammenfallen.

16. Vorrichtung nach einem der Ansprüche 1 bis 15, dadurch gekennzeichnet, daß das Reibrad (2) drehfest mit dem Rotor des Elektromotors (1) verbunden ist.

17. Vorrichtung nach einem der Ansprüche 1 bis 16, dadurch gekennzeichnet, daß die Bewegungseinheit (8) mit in Richtung der Antriebsverbindung zwischen Reibrad (2) und Meßspindel (9) wirkender Federvorspannung in der Lagereinrichtung (4, 5; 6, 7) gelagert ist.

## Claims

1. Apparatus for driving a measuring spindle (9) of a balancing machine comprising a friction wheel (2) which is driven by an electric motor (1) having a rotor and which together with the electric motor (1) forms a unit fixed to a machine frame (3), wherein the friction wheel (2) can be brought into and out of driving connection with the measuring spindle (9) by a torque generated when the rotor of the electric motor (1) is accelerated, characterised in that the unit comprising the electric motor (1) and the friction wheel (2) is in the form of a motion unit (8) which is supported movably about a pivot axis (24) of a mounting means (4, 5; 6, 7) arranged on the machine frame (3) and which is arranged in displaced relationship relative to the rotor axis (23) of the electric motor (1), so that the motion unit (8) is moved towards the measuring spindle (9) by the torque generated when the rotor of the electric motor (1) is accelerated to make the driving connection between the friction wheel (2) and the measuring spindle (9).

2. Apparatus according to claim 1 characterised in that the motion unit (8) is mounted on the machine frame (3) in such a way that the driving connection between the friction wheel (2) and the measuring spindle (9) is automatically released by termination of the acceleration of the rotor of the electric motor (1).

3. Apparatus according to claim 1 or claim 2 characterised in that the frictional connection is maintained by virtue of a counteracting moment produced upon the transmission of force at the frictional connection between the friction wheel (2) and the measuring spindle (9) or a drive wheel (10) which is non-rotatably connected to the measuring spindle (9).

4. Apparatus according to one of claims 1 to 3 characterised in that the motion unit (8) bears against an abutment (32) in the acceleration phase.

5. Apparatus according to one of claims 1 to 4 characterised in that the motion unit (8) is held in equilibrium in the rest position by a weight-compensating means.

6. Apparatus according to claim 5 characterised in that the weight-compensating means is in the form of a spring (11) supported on the machine frame (3).

7. Apparatus according to one of claims 1 to 6 characterised in that the motion unit (8) is mounted resiliently relative to the machine frame (3) in the mounting means (4, 5; 6, 7).

8. Apparatus according to one of claims 1 to 7 characterised in that the mounting means (4, 5; 6, 7) has two mounting locations.

9. Apparatus according to claim 8 characterised in that the motion unit (8) is mounted resiliently in at least one mounting location.

10. Apparatus according to one of claims 1 to 9 characterised in that the motion unit (8) is mounted pivotably in the mounting means (4, 5; 6, 7).

11. Apparatus according to one of claims 1 to 10 characterised in that the pivot axis (24) which is formed in the mounting means (4, 5; 6, 7) is disposed parallel to the rotor axis (23).

12. Apparatus according to one of claims 1 to 11 characterised in that the motion unit (8) is guided about a mounting pivot point (21) in one mounting location (7) and linearly in another mounting location (6).

13. Apparatus according to one of claims 1 to 11 characterised in that the motion unit (8) is guided linearly in both mounting locations (4, 5).

14. Apparatus according to claim 12 or claim 13 characterised in that the linear guidance of the motion unit (8) is effected substantially in a plane in which the axis of rotation (25) of the measuring spindle (9) and the axis of the friction wheel (2) when in the driving position are disposed.

15. Apparatus according to one of claims 1 to 14 characterised in that the axis of the friction wheel (2) and the rotor axis (23) of the electric motor (1) coincide.

16. Apparatus according to one of claims 1 to 15 characterised in that the friction wheel (2) is non-rotatably connected to the rotor of the electric motor (1).

17. Apparatus according to one of claims 1 to 16 characterised in that the motion unit (8) is mounted in the mounting means (4, 5; 6, 7) with a spring biasing operative in the direction of the driving connection between the friction wheel (2) and the measuring spindle (9).

## Revendications

1. Dispositif d'entraînement de la broche (9) de mesure d'une machine d'équilibrage, comprenant une roue (2) de friction, qui est entraînée par un moteur (1) électrique comportant un rotor et qui forme conjointement avec le moteur (1) électrique une unité fixée sur un bâti (3) de machine, la roue (2) de friction pouvant être amenée en liaison d'entraînement, et hors de cette liaison, avec la broche (9) de mesure par un couple de rotation produit lors de l'accélération du rotor du moteur (1) électrique,
**caractérisé** en ce que l'unité constituée du moteur (1) électrique et de la roue (2) de friction est conçue comme unité (8) mobile, qui est soutenue avec possibilité à déplacement autour d'un axe (24) de pivotement d'un ensemble (4, 5; 6, 7) de palier monté sur le bâti (3) de machine en étant décalé par rapport à l'axe (23) du rotor du moteur (1) électrique, de sorte que, par le couple produit lors de l'accélération du rotor du moteur (1) électrique, l'unité (8) mobile est déplacée vers la broche (9) de mesure afin de réaliser la liaison d'entraînement entre la roue (2) de friction et la broche (9) de mesure.

2. Dispositif suivant la revendication 1, **caractérisé** en ce que l'unité (8) mobile est montée sur le bâti (3) de machine de telle sorte que la liaison d'entraînement entre la roue (2) de friction et la broche (9) de mesure est automatiquement supprimée à l'achèvement de l'accélération du rotor du moteur (1) électrique.

3. Dispositif suivant la revendication 1 ou 2, **caractérisé** en ce que l'engagement par friction est maintenu en raison d'un couple antagoniste qui apparaît, lors de la transmission de force, au niveau de l'engagement par friction entre la roue (2) de friction et la broche (9) de mesure, ou encore entre la roue (2) de friction et une roue (10) d'entraînement assemblée en solidarité de rotation à la broche (9) de mesure.

4. Dispositif suivant l'une des revendications 1 à 3, **caractérisé** en ce que, dans la phase d'accélération, l'unité (8) mobile s'applique contre une butée (32).

5. Dispositif suivant l'une des revendications 1 à 4, **caractérisé** en ce que l'unité (8) mobile est maintenue en équilibre dans la position de repos par un dispositif d'équilibrage de poids.

6. Dispositif suivant la revendication 5, **caractérisé** en ce que le dispositif d'équilibrage de poids est réalisé sous la forme d'un ressort (11) s'appuyant sur le bâti (3) de machine.

7. Dispositif suivant l'une des revendications 1 à 6, **caractérisé** en ce que l'unité (8) mobile est montée élastiquement par rapport au bâti (3) de machine dans l'ensemble (4, 5; 6, 7) de palier.

8. Dispositif suivant l'une des revendications 1 à 7, **caractérisé** en ce que l'ensemble (4, 5; 6, 7) de palier comporte deux points d'appui.

9. Dispositif suivant la revendication 8, **caractérisé** en ce que l'unité (8) mobile est montée élastiquement dans au moins un point d'appui.

10. Dispositif suivant l'une des revendications 1 à 9, **caractérisé** en ce que l'unité (8) mobile est montée à pivotement dans l'ensemble (4, 5; 6, 7) de palier.

11. Dispositif suivant l'une des revendications 1 à 10, **caractérisé** en ce que l'axe (24) de pivotement formé dans l'ensemble (4, 5 ; 6, 7) de palier est parallèle à l'axe (23) du rotor.

12. Dispositif suivant l'une des revendications 1 à 11, **caractérisé** en ce que l'unité (8) mobile est guidée autour d'un centre (21) de rotation dans un point (7) d'appui, et en ligne droite dans un autre point (6) d'appui.

13. Dispositif suivant l'une des revendications 1 à 11, **caractérisé** en ce que l'unité (8) mobile est guidée en ligne droite dans les deux points (4, 5) d'appui.

14. Dispositif suivant la revendication. 12 ou 13, **caractérisé** en ce que le guidage rectiligne de l'unité (8) mobile s'effectue essentiellement dans un plan dans lequel se trouvent l'axe (25) de rotation de la broche (9) de mesure et l'axe de la roue (2) de friction se trouvant en position d'entraînement.

15. Dispositif suivant l'une des revendications 1 à 14, **caractérisé** en ce que l'axe de la roue (2) de friction et l'axe (23) du rotor du moteur (1) électrique coïncident.

16. Dispositif suivant l'une des revendications 1 à 15, **caractérisé** en ce que la roue (2) de friction est assemblée en solidarité de rotation au rotor du moteur (1) électrique.

17. Dispositif suivant l'une des revendications 1 à 16, **caractérisé** en ce que l'unité (8) mobile est montée dans l'ensemble (4, 5; 6, 7) de palier avec une précontrainte de ressort agissant en direction de la liaison d'entraînement entre la roue (2) de friction et la broche (9) de mesure.
